# EUROPEAN PATENT SPECIFICATION

(11) **EP 4 419 452 B1**
(45) Date of publication and mention of the grant of the patent: **02.12.2026**
(21) Application number: 22793230.8
(22) Date of filing: 01.10.2022
(51) Int. Cl.: B65G 1/137, B65G 47/90, B65G 47/91, B23P 19/00

(54) **IMPROVED INDUSTRIAL PLANT AND METHOD**
VERBESSERTE INDUSTRIEANLAGE UND VERFAHREN
INSTALLATION INDUSTRIELLE AMÉLIORÉE ET PROCÉDÉ

(30) Priority: 19.10.2021 IT 202100026894
(43) Date of publication of application: 28.08.2024
(73) Proprietor: TECNO LOGICA S.R.L., 31027 Spresiano (TV) (IT)
(72) Inventor: PIASENTIN, Mirko, 33170 Spresiano (TV) (IT)
(74) Representative: Citron, Massimiliano
(86) International application number: PCT/IB2022/059378
(87) International publication number: WO 2023/067419

(56) References cited:
- DE-A1- 102010 015 617
- DE-B- 1 127 804
- FR-A1- 2 713 612
- US-A- 4 870 799
- US-A- 6 011 998
- US-A1- 2019 193 939

## Description

The present invention relates to an improved industrial plant and method, in particular to a unit or apparatus for in-line loading workpieces and the method for in-line loading workpieces.

In well-known industrial plants for mass production of assembled furniture, taken as an example here, a line performs various machining operations (drilling, milling, ... and assembly operations) on the components fed at its entry. Components, e.g. panels and/or hardware, are automatically picked up from loading bays, which components are then sequentially processed along the line to eventually make up the assembled furniture or part thereof. See e.g. EP 1 342 535.

The preparation of the components on each bay is a critical step.

Currently, each bay is first prepared manually. A worker goes to the warehouse to find the necessary workpieces specified on an order list for that day, and then he takes the bay at the entry of the line, where a machine will pick up the workpieces.

It is easy to see that such a system has several disadvantages.

Not only is the time for preparing the bays very long, increasing the production cost, but large storage spaces are needed to allow for the movement and job of the workers (and many workers are needed).

If then the finished product, or a production with many variations, requires many different workpieces (e.g. different colors or sizes), the number of workpieces in the warehouse increases and with it the complexity and difficulty of preparing the bays.

It is clear that such a system discourages the design of, or thwarts the investment in, a production plant capable of manufacturing products with wide-ranging models.

DE 1 127 804 refers to a method for loading with the steps of subdividing the set of components into subsets spatially arranging the subsets into a spatial sequence, moving a train of workpiece-carriers in front of the subsets so that all the workpiece-carriers arrive sequentially at each subset at least once so that, when necessary, it is possible to take from a subset a component and load it on the workpiece-carrier, and all workpiece-carriers also arrive sequentially at the line entry. The method further comprises the step of each workpiece-carrier arriving at each subset, activating or excluding the loading of a component from that subset so that, progressively as the train moves, consecutive workpiece-carriers of the train are loaded and emptying one workpiece-carrier after the other.

DE 1 127 804 also refers to a feeder apparatus the apparatus comprising subsets of components spatially arranged into a spatial sequence, a train of workpiece-carriers that is movable with respect to the subsets so that each workpiece-carrier sequentially arrives at each subset at least once. The apparatus further comprises first means for releasing a component from a subset and load it onto a workpiece-carrier of the train, as well as an electronic control unit configured for controlling the movement of the workpiece-carriers so that they arrive sequentially at each subset at least once, driving the first means, activating or excluding the loading of a component from a subset so that, progressively as the train moves, consecutive workpiece-carriers of the train are loaded with components.

The main object of the invention is to improve the present state of the art.

Another object of the invention is to make an improved industrial plant for producing an assembled product (a piece of furniture), or an assembled part of a product (e.g. a drawer), starting from separate components (e.g. panels and/or hardware).

In particular, the object of the invention is to make a workpiece feeder for the industrial plant to produce said assembled product more efficiently.

These and other objects are achieved by what is contained in the attached claims; advantageous technical features are defined in the dependent claims.

An aspect of the invention is a method, according to claim 1, for loading on a line, capable of producing an assembled product (e.g. a piece of furniture) or an assembled part of a product (such as a drawer) starting from a set of N separate components (N >= 2) and assembling the N separate components in a certain order. E.g. a separate component of the N components is a top panel, a back panel, a bottom panel, or two side panels, and optionally an intermediate shelf, and/or linear guides and/or reinforcement strips, to make up a drawer or cabinet compartment at the end of the line.

The method allows the N components, which are required to eventually produce a desired finished part, to be loaded at the entry of a line in a predefined sequence, and has the steps of
- subdividing the set of N components into K subsets of components (e.g. stacks), K >= 2, and spatially arranging the K subsets in a spatial sequence (e.g. in rows or stacks),
- moving a train of workpiece-carriers in front of the K subsets in such a manner that
   ∘ all the workpiece-carriers arrive sequentially at each subset at least once so that, when necessary, a component (at a time) can be taken from a subset and loaded onto the workpiece-carrier (e.g. when it is closer), and
   ∘ all the workpiece-carriers also arrive sequentially at the line entry, and
- for each workpiece-carrier arriving (close) to each subset, activating or excluding the loading of a component from that subset so that, progressively as the train moves, consecutive workpiece-carriers of the train are loaded with components corresponding to the predefined sequence, and
- components are picked up from said consecutive workpiece-carriers and loaded onto the line, emptying one workpiece-carrier after the other.

Therefore, the line is fed with the desired sequence of components.

In other words, each of the consecutive workpiece-carriers arrives (close) to each subset, and in that circumstance it is decided to load a component from that subset if the final sequence of components in said consecutive workpiece-carriers requires such component, otherwise nothing is loaded from that subset and the empty workpiece-carrier will eventually be loaded from a subsequent subset.

Said consecutive workpiece-carriers may possibly comprise empty workpiece-carriers from time to time, even if production efficiency is lower.

As the carriers of the train visit all the K subsets, consecutive workpiece-carriers of the train are progressively loaded with components corresponding to the predefined sequence, which is completed when the last workpiece-carrier of the consecutive ones has left the last subset. Then the components will be loaded sequentially on the line picking them up from the chain of consecutive workpiece-carriers.

Preferably, a component from each subset is loaded onto a workpiece-carrier by means of a robot or a manipulator, in particular a robot or manipulator dedicated only to such subset. It is also possible to provide only one robot or manipulator for all K subsets.

Preferably, components are picked up from said consecutive workpiece-carriers and loaded onto the line by means of a robot or manipulator,

Preferably, the robots or manipulators of each subset are activated to load a component onto a workpiece-carrier or controlled to do something else (e.g. set to pause) if, respectively, the current workpiece-carrier present at such subset must contain a component to comply with the predefined sequence, or not.

Although the train could be a row of workpiece-carriers moving linearly back and forth, for greater efficiency and less bulk the train is preferably a closed chain of workpiece-carriers moving on a closed or circular path, e.g. always in the same direction of movement.

Preferably each subset consists of adjacent stacks of equal components, each stack having the same height (and/or same number of components).

Preferably from the adjacent component stacks of each subset, a plane of components is unloaded and deposited in a work area, from which they are picked up as needed to be loaded onto a workpiece-carrier.

The work area may be a dedicated space, or a portion of a conveyor means.

More preferably, if unused components remain in the plane of components present in the work area (because the piece sequence does not require them), instead of sending them back to the warehouse, they are placed in a temporary rest area and loaded onto a workpiece-carrier at the first occurrence.

Preferably, a workpiece that is single and not needed on the line in large quantities is loaded onto a workpiece-carrier by picking it directly from a storage unit without the subdivision into K subsets.

Another aspect of the invention relates to a feeder apparatus, according to claim 10, capable of carrying out the above method. The apparatus is configured to feed the entry of a production line, made up of several machines in series, with a predetermined sequence of N components, the N components being necessary to produce a desired finished part at the end of the line. The apparatus comprises:
- K subsets of components (e.g. stacks), K >= 2, spatially arranged in a spatial sequence (e.g. in a row or stack),
- a train of workpiece-carriers that is movable with respect to the K subsets so that each workpiece-carrier sequentially arrives to each subset at least once and also arrives at said entry.

Although loading from the K subsets and/or unloading toward the line could be done manually, in order to automate the system the feeder apparatus preferably comprises means or one or more manipulators to pick up a component from a subset (e.g. at a time) and load it onto a workpiece-carrier of the train (when the workpiece-carrier is closer). To increase the production speed, more preferably at each subset there is a means or one or more manipulators for picking from such subset.

Although the loading from the train to the line could be done manually, to automate the system the feeder apparatus preferably comprises means or one or more manipulators to pick up from a workpiece-carrier of the train the component contained therein and load it onto the line.

Each workpiece-carrier in the train is adapted to contain at a time only components (one or more than one) taken from a single subset.

Although the control of the means or one or more manipulators to pick up from a subset and/or the control of the means or one or more manipulators to pick up from a workpiece-carrier of the train and load it onto the line could be done manually, to automate the system the feeder apparatus preferably comprises a programmable electronic unit for driving the aforementioned means or manipulators.

In particular, to increase production speed and efficiency, more preferably the apparatus comprises
- first means, or one or more manipulators, to pick up a component from a subset and load it onto a workpiece-carrier of the train,
- second means, or one or more manipulators, to pick up a component from a workpiece-carrier of the train and load it onto the production line,
- an electronic control unit configured for
   - controlling the movement of the workpiece-carriers so that they arrive sequentially at each subset at least once and also arrive sequentially at the line entry,
   - driving the first means to be able to pick up a component from a subset and load it onto a workpiece-carrier,
   - driving the second means to pick up a component from a workpiece-carrier and load it onto the line,
   - activating or excluding the loading of a component from a subset so that, progressively as the train moves, consecutive workpiece-carriers of the train are loaded with components corresponding to the predefined sequence, and
   - driving the second means to pick up components from said consecutive workpiece-carriers and load them onto the line, emptying one carrier after the other.

In the apparatus, the train comprises a row of workpiece-carriers adapted to move linearly back and forth. For greater efficiency, the train preferably comprises a closed chain of workpiece-carriers adapted to move on a closed or circular path, e.g. always in the same direction of movement.

Preferably, in the apparatus each subset consists of adjacent stacks of equal components. E.g. each stack has the same height (and/or the same number of components).

Preferably, the apparatus comprises a conveyor device adapted to transport a stack of components and/or each subset from a warehouse to the train of workpiece-carriers.

In particular, the apparatus comprises K of said conveyor devices, one dedicated to each subset.

In particular, one or each conveyor device comprises a roller or conveyor belt.

In particular, the said K conveyor devices are arranged in parallel rows in front of the train of workpiece-carriers. In particular, the parallel rows are arranged along a direction perpendicular to a linear row of workpiece-carriers in the train.

In particular, one or each conveyor device comprises a temporary rest area for workpieces.

In particular, one or each conveyor device comprises
a first transporting means
a second transporting means placed in series with the first one, and
two robots or manipulators,
one placed between the first transporting means and the second transporting means to transfer workpieces from the first transporting means to the second transporting means, and
one placed between the second transporting means and the train to transfer workpieces from the second transporting means to the train of workpiece-carriers.

More specifically, the temporary rest area is provided on the second transporting means, close to the first transporting means.

Preferably the panels are wooden and/or flat.

In the apparatus and method, preferably the activity of manipulators, robots and transporting means in general is controlled and regulated via software.

Known manipulators, robots and transporting means may also be used in the apparatus and method.

In the apparatus and method e.g. a pallet catenary or a belt advancing at a predefined rate can be used as a workpiece train.

Further advantages will become clear from the following description, which refers to an example of preferred embodiment of workpiece-feeding apparatus in which:
Figure 1 shows a scheme of the feeder apparatus,
Figure 2 shows a loading bay,
Figure 3 shows a scheme variant for the feeder apparatus.

Equal numbers in the figures indicate equal or substantially equal parts. Arrows indicate the movement direction of the material.

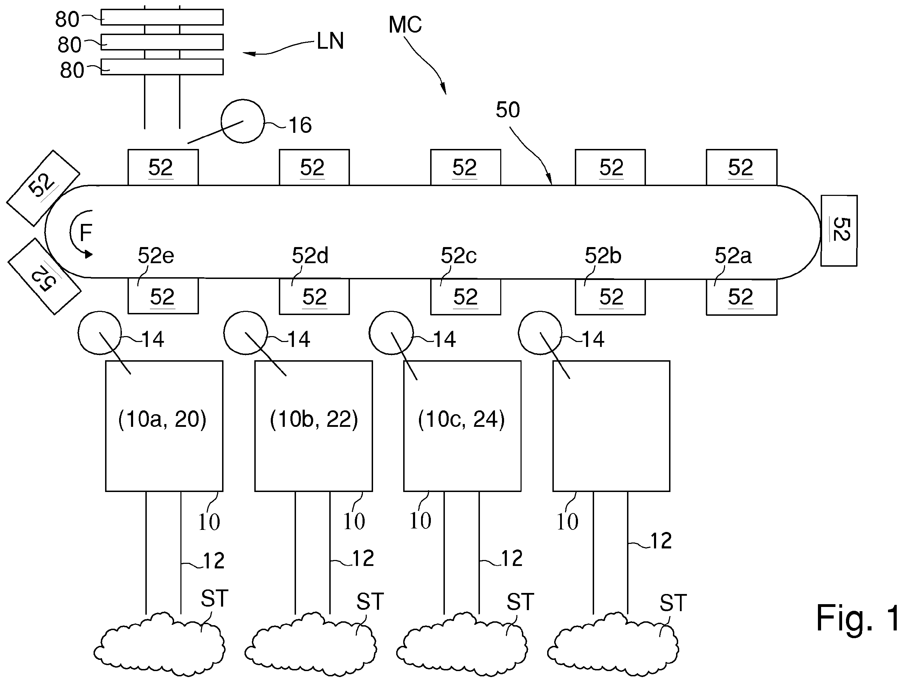

A feeder MC of Fig. 1 is placed between the entry of a production line LN and an warehouse ST to feed the line LN with a predefined sequence of workpieces. The production line LN consists of a series of machines 80 that successively process the workpiece loaded at its entry. The warehouse ST is e.g. a well-known warehouse, from which the workpieces to be processed are taken.

The feeder MC comprises a plurality of loading bays 10 and a conveyor 50.

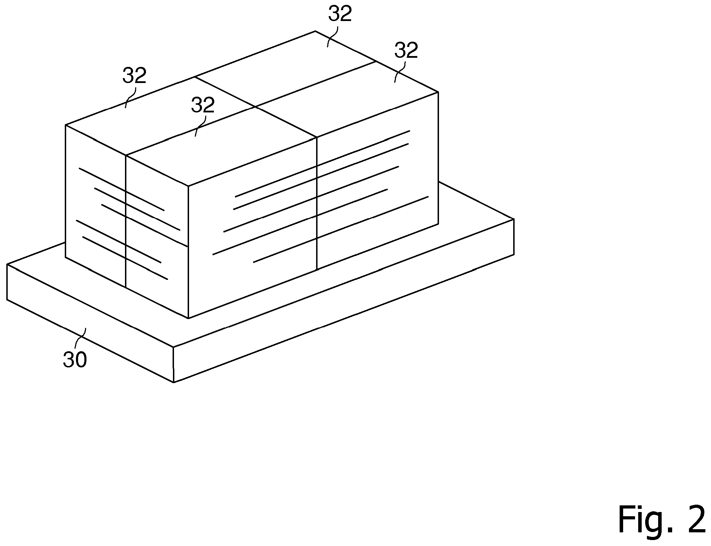

Each bay 10 accommodates stacked workpieces 32, e.g. on a support or pallet 30 (see Fig. 2), which is movable on roller tracks or rails 12 (only some shown) to and from the warehouse ST to bring workpieces to the conveyor 50 continuously. The number of bays 10 may vary, two or more. The bays 10 are arranged in a row on one side of the ring, with the entry of the line LN arranged on the opposite side. Each bay 10 contains workpieces that are all equal and different from those of the other bays 10.

The conveyor 50 comprises a train of workpiece-carriers 52 driven to move continuously to reach the bays 10 and the line LN. The train of workpiece-carriers 52 can e.g. move forward-backward, or more efficiently on a ring-shaped closed loop (see arrow F). Each carrier 52 may contain one or more workpieces of the bays 10. The carriers 52 are spaced from each other approximately as far apart as the distance between two bays 10, so as the train moves along the ring each carrier 52 can pass in front of each bay 10. A or each workpiece-carrier 52 may be, for example, a suspended tray conveyor, a frame, a container or a clampable gripper.

The workpieces are first transferred from the bays 10 to the conveyor 50 and then from the conveyor 50 to the line LN. Although the transfer of workpieces could be done manually, it is best to make the system faster and more automatic by using robots or manipulators 14 to transfer workpieces from the bays 10 to the conveyor 50 and robots or manipulators 16 to transfer workpieces from the conveyor 50 to the line LN. At least one dedicated robot or manipulator 14 should be dedicated for each bay 10 and one or more robots or manipulators 16 for the line LN.

To serve the bays 10, it is also possible to provide a single robot or manipulator 14 capable of moving from one bay 10 to another.

To facilitate the transfer of workpieces, the conveyor 50 is preferably configured or driven to stop temporarily in order to let the workpiece-carriers 52 be stationary near the bays 10.

The operating logic of the feeder MC will now be explained, using an example wherein there are three bays 10, denoted for convenience by 10a, 10b, 10c, containing workpieces 20, 22, 24 respectively, and on the line LN the sequence of workpieces 20-24-24-22-22 is needed. The sequence of workpieces is prepared on consecutive workpiece-carriers 52, which we will distinguish for convenience with 52a, 52b, 52c, 52d and 52e, respectively.

The workpiece-carrier 52a arrives empty at the bay 10a and the manipulator 14 loads the workpiece 20 onto it. When the train of workpiece-carriers 52 then advances, the workpiece-carrier 52a will arrive at the bays 10b and 10c but the manipulator 14 will load nothing.

The workpiece-carrier 52b arrives empty at the bay 10a and the manipulator 14 loads nothing. Then the workpiece-carrier 52b runs on and arrives empty at the bay 10b and there the manipulator 14 loads nothing. Then the workpiece-carrier 52b runs on and arrives at the bay 10c where the manipulator 14 loads the workpiece 24 on it.

The same will happen for the workpiece-carrier 52c.

The workpiece-carrier 52d arrives empty at the bay 10a and the manipulator 14 loads nothing. Then the workpiece-carrier 52d runs on and arrives empty at the bay 10b and there the manipulator 14 loads the workpiece 22. Then the workpiece-carrier 52d runs on and arrives at the bay 10c and the manipulator 14 loads nothing there.

The same will happen with the workpiece-carrier 52e.

With this load, the train of workpiece-carriers 52 advances, bringing the workpiece-carriers 52a, 52b, 52c, 52d, 52e in the vicinity of the line LN, where the manipulator 16 picks up the workpieces from the workpiece-carriers 52 in the order in which they arrive, forming the sequence of workpieces 20-24-24-22-22 on the line LN.

In short, in order to fill consecutive workpiece-carriers 52 with the desired sequence of workpieces, it is determined which consecutive workpiece-carriers 52 must contain the workpieces of the sequence. Then, each time an empty carrier 52 stops near a bay 10, worpieces are loaded on it (from that bay 10) only if they match those of the sequence for that carrier 52. In other words, at each bay 10 there are loaded the workpieces required to form the sequence in the consecutive carriers 52.

When the last workpiece-carrier 52 of the consecutive workpiece-carriers 52 leaves the last bay 10, there will be the desired sequence of workpieces on the consecutive workpiece-carriers 52.

Generally speaking, to obtain a desired sequence of workpieces on consecutive supports 52, it is enough that each bay 10 loads its workpiece/s onto the supports 52 that require that/those workpiece/s. When all the bays 10 have been passed, the sequence of workpieces will have been formed on the consecutive supports 52.

This operating logic is carried out e.g. by programming a PLC or computer that controls the motion of the conveyor 50 and the various robots and manipulators 12, 14 accordingly.

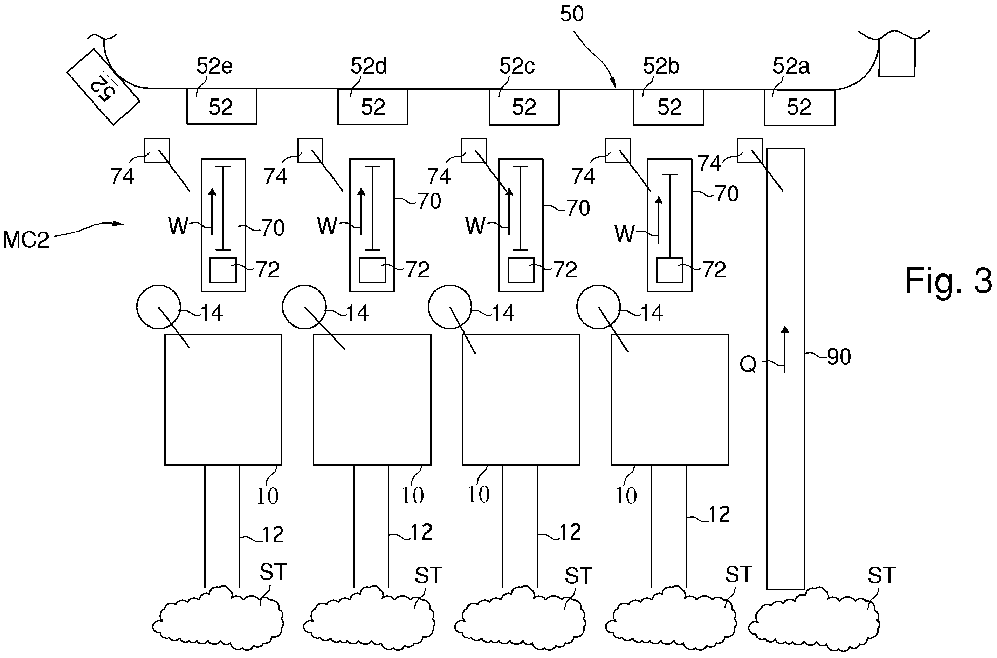

Fig. 3 illustrates a variant of the apparatus indicated with MC2.

Here, between the bays 10 and the conveyor 50, conveyor transporting means 70 equipped with a temporary rest platform 72 for the workpieces are interposed.

The manipulator 14 is placed at one end of the means 70 and is able to pick up a plane or *layer* of workpieces from the bays 10 and lay it on the transporting means 70 which transfer it towards the manipulator 74 (arrow W). Each of the transporting means 70 comprises, at the opposite end, a manipulator 74 for loading workpieces onto the workpiece-carriers 52 by taking them from the transporting means 70 according to the logic indicated above.

It should be noted that here the workpieces are taken from the transporting means 70 and not directly from the bays 10.

In the event that workpieces not immediately required for the composition of the sequence of workpieces on the conveyor 50 remain on one of the transporting means 70, the manipulator 14 removes them and temporarily parks them on the plane 72, leaving the means 70 free for a change of format or workpieces. The workpieces parked on the platform 72 will be the first to be picked up by the manipulator 14 and repositioned on the means 70 at the service of the production before recalling other identical workpieces from the bays 10. If necessary, the platform 72 may also act as a buffer station for the workpieces, if more time is needed in recalling from the warehouse ST a particular bay 10 than the others.

As an option, an apparatus according to the invention, e.g. that indicated with MC and/or MC2, may comprise a transporting means 90 for carrying (see arrow Q) to the conveyor 50 individual workpieces, or workpieces present in smaller quantities, arriving directly from the warehouse ST without the need to pick up from a stack (i.e. without passing over a bay 10). In this case, the transporting means 90 directly feed the manipulator 74 which loads the workpieces onto the workpiece-carriers 52.

For the apparatus of Fig. 3 as well, to serve the bays 10 it is possible to provide a single robot or manipulator 14 capable of moving to pass from one bay 10 to the other. To serve the means 70, it is also possible to provide a single robot or manipulator 74 capable of moving to pass from one means 70, 90 to the other.

In the apparatuses according to the invention preferably the activity of manipulators, robots and/or transporting means generally is controlled and regulated electronically via software.

The feeder apparatus according to the invention can be further improved with the following options.

The conveyor 50 may have several levels or 'planes' of workpiece-carriers 52 travelling in parallel to increase transport capacity.

To facilitate the gripping of the robots or manipulators 14, the workpieces 32 on the supports or pallets 30 are arranged on adjacent stacks.

Furthermore, from these stacks preferably a robot or manipulator 18 (e.g. with suction cups) picks up a layer of workpieces and places them in a temporary area from where the robot or manipulator 14 will pick them up and load them onto the conveyor 50.

To minimize the risk of incorrect workpieces, each support 30 comprises an identifier, which is read by a reader device before reaching the destination bay 10.

When a bay 10 has no more workpieces, the corresponding pallet returns to the warehouse ST to be reloaded and is replaced by a full pallet or support 30. For this purpose, a or each pallet or support 30 is movable and/or motorized.

It can happen that after many cycles in a bay, here called a bay 10x, only a few workpieces remain which will not be used in near-future sequences. The bay 10x risks creating a stoppage of the line LN if a sequence of workpieces is needed containing more workpieces than the bay 10x has (because it is necessary to wait for the arrival of a loaded support 30 from the warehouse ST).

To avoid this problem, the logic of the feeder envisages loading the few remaining workpieces of the bay 10x onto the supports 52 as soon as possible. Thus, the empty support 30 can be cleared from the bay 10x and replaced with one full of the same or different workpieces.

## Claims

1. , Method for loading in a predefined sequence at the entry of a line (LN) N components, N >= 2, required to eventually produce a desired finished product,
the line (LN) being capable of
producing an assembled product starting from the N separate components and assembling the N separate components in a certain order,
with the steps of
subdividing the set of N components into K subsets of components, K >= 2,
spatially arranging the K subsets into a spatial sequence,
moving a train of workpiece-carriers (52) in front of the K subsets so that all the workpiece-carriers (52) arrive sequentially at each subset at least once so that, when necessary, it is possible to take from a subset a component and load it on the workpiece-carrier (52), and all workpiece-carriers (52) also arrive sequentially at the line entry, and
for each workpiece-carrier (52) arriving at each subset, activating or excluding the loading of a component from that subset so that, progressively as the train moves, consecutive workpiece-carriers (52) of the train are loaded with components corresponding to the predefined sequence, and
picking components from said consecutive workpiece-carriers (52) and loading them onto the line (LN), emptying one workpiece-carrier (52) after the other.

2. . Method according to claim 1, wherein a component is loaded from each subset onto a workpiece-carrier (52) via a robot or manipulator (14).

3. . Method according to claim 1 or 2, wherein components are picked up from said consecutive workpiece-carriers (52) and loaded onto the line by a robot or manipulator (16).

4. . Method according to claim 2 or 3, wherein the robots or manipulators (14) of each subset are activated to load a component onto a workpiece-carrier (52) or controlled to do something else if, respectively, the current workpiece-carrier (52) present at said subset must contain a component to comply with the predefined sequence or not.

5. . Method according to any preceding claim, wherein each subset comprises adjacent stacks of equal components, each stack having the same height, and from the adjacent stacks of components of each subset a layer of components is unloaded and laid in a work area, from which they are picked for loading onto a workpiece-carrier (52).

6. . Method according to any preceding claim, wherein if components remain unused, they are placed in a temporary rest area (72) and loaded onto a workpiece-carrier (52) at the first occurrence.

7. . Method according to any preceding claim, wherein the assembled product is a piece of furniture.

8. . Method according to any preceding claim, wherein the separate components are panels and/or hardware.

9. . Method according to any preceding claim, wherein a separate component of the N components is a top panel, a back panel, a bottom panel, or two side panels, and optionally an intermediate shelf, and/or linear guides and/or reinforcement strips, to make up a drawer or cabinet compartment at the end of the line.

10. . Feeder apparatus configured to feed the entry of a production line (LN), made up of several machines in series, with a predefined sequence of N components, the N components being used to produce a desired finished part at the end of the line (LN), the apparatus comprising:
- K subsets of components, K >= 2, spatially arranged into a spatial sequence,
- a train of workpiece-carriers (52) that is movable with respect to the K subsets so that each workpiece-carrier (52) sequentially arrives at each subset at least once and also arrives at said entry,
- first means (14), or one or more manipulators, for picking up a component from a subset and load it onto a workpiece-carrier (52) of the train,
- second means (16), or one or more manipulators, for picking up a component from a workpiece-carrier of the train and loading it onto the production line (LN),
- an electronic control unit configured for
• controlling the movement of the workpiece-carriers (52) so that they arrive sequentially at each subset at least once and also arrive sequentially at the line (LN) entry,
• driving the first means (14) to be able to pick up from a subset a component and load it on a workpiece-carrier (52),
• driving the second means (16) to pick up a component from a workpiece-carrier (52) and load it onto the line (LN),
• activating or excluding the loading of a component from a subset so that, progressively as the train moves, consecutive workpiece-carriers (52) of the train are loaded with components corresponding to the predefined sequence, and
• driving the second means (16) to pick up the components from said consecutive workpiece-carriers (52) and load them onto the line (LN), emptying one carrier after the other.

11. . Apparatus according to claim 10, wherein the train comprises a closed chain of workpiece-carriers (52) adapted to move on a closed or circular path.

12. . Apparatus according to claim 10 or 11, wherein each subset comprises a respective conveyor device (12),
such K conveyor devices (12) being arranged in parallel rows in front of the train of workpiece-carriers (52).

13. . Apparatus according to claim 12, wherein the parallel rows are arranged along a direction perpendicular to a linear row of workpiece-carriers (52) in the train.

14. . Apparatus according to claim 12 or 13, wherein one or each conveyor device (12) comprises a first transporting means and a second transporting means placed in series with the first means, and two robots or manipulators,
one placed between the first transporting means and the second transporting means for transferring components from the first transporting means to the second transporting means, and
one placed between the second transporting means and the train to transfer components from the second transporting means to the train of workpiece-carriers (52).

## Patentansprüche

1. Verfahren zum Beschicken des Einlaufs einer Linie (LN) in einer vorgegebenen Reihenfolge mit N Komponenten, wobei N >= 2, die erforderlich sind, um schließlich ein gewünschtes Fertigprodukt herzustellen,
wobei die Linie (LN) in der Lage ist,
ein zusammengebautes Produkt ausgehend von den N separaten Komponenten und durch Zusammenbauen der N separaten Komponenten in einer bestimmten Reihenfolge herzustellen,
mit den Schritten:
Unterteilen des Satzes von N Komponenten in K Teilmengen von Komponenten, wobei K >= 2,
räumliches Anordnen der K Teilmengen in einer räumlichen Sequenz,
Bewegen eines Zuges von Werkstückträgern (52) vor den K Teilmengen, so dass alle Werkstückträger (52) nacheinander mindestens einmal an jeder Teilmende ankommen, so dass es bei Bedarf möglich ist, eine Komponente aus einer Teilmende zu entnehmen und auf den Werkstückträger (52) zu laden, und alle Werkstückträger (52) ebenfalls nacheinander am Linieneinlauf ankommen, und
für jeden an jeder Teilmende ankommenden Werkstückträger (52) das Laden einer Komponente aus dieser Teilmende zu aktivieren oder auszuschließen, so dass sich progressiv bei der Bewegung des Zuges aufeinanderfolgende Werkstückträger (52) des Zuges mit Komponenten beladen, die der vorgegebenen Reihenfolge entsprechen, und
Entnehmen von Komponenten von den besagten aufeinanderfolgenden Werkstückträgern (52) und Laden derselben auf die Linie (LN), wobei ein Werkstückträger (52) nach dem anderen entleert wird.

2. Verfahren nach Anspruch 1, wobei eine Komponente aus jeder Teilmende mittels eines Roboters oder Manipulators (14) auf einen Werkstückträger (52) geladen wird.

3. Verfahren nach Anspruch 1 oder 2, wobei Komponenten von den besagten aufeinanderfolgenden Werkstückträgern (52) entnommen und durch einen Roboter oder Manipulator (16) auf die Linie geladen werden.

4. Verfahren nach Anspruch 2 oder 3, wobei die Roboter oder Manipulatoren (14) jeder Teilmenge aktiviert werden, um eine Komponente auf einen Werkstückträger (52) zu laden, oder so gesteuert werden, dass sie etwas anderes tun, wenn beziehungsweise falls der an der besagten Teilmenge anwesende aktuelle Werkstückträger (52) eine Komponente enthalten muss, um der vorgegebenen Reihenfolge zu entsprechen, oder nicht.

5. Verfahren nach einem der vorhergehenden Ansprüche, wobei jede Teilmenge benachbarte Stapel gleicher Komponenten umfasst, wobei jeder Stapel dieselbe Höhe aufweist, und aus den benachbarten Komponentenstapeln jeder Teilmenge eine Komponentenschicht entladen und in einem Arbeitsbereich abgelegt wird, aus dem sie zum Laden auf einen Werkstückträger (52) entnommen wird.

6. Verfahren nach einem der vorhergehenden Ansprüche, wobei, wenn Komponenten ungenutzt bleiben, sie in einem temporären Ablagebereich (72) platziert und beim ersten Auftreten auf einen Werkstückträger (52) geladen werden.

7. Verfahren nach einem der vorhergehenden Ansprüche, wobei das zusammengebaute Produkt ein Möbelstück ist.

8. Verfahren nach einem der vorhergehenden Ansprüche, wobei die separaten Komponenten Paneele und/oder Beschläge sind.

9. Verfahren nach einem der vorhergehenden Ansprüche, wobei eine separate Komponente der N Komponenten ein oberes Paneel, ein Rückwandpaneel, ein unteres Paneel oder zwei Seitenpaneele und optional ein Zwischenregal und/oder lineare Führungen und/oder Verstärkungsleisten ist, um am Ende der Linie ein Schubladen- oder Schrankabteil zu bilden.

10. Zuführvorrichtung, die so konfiguriert ist, dass sie den Einlauf einer aus mehreren in Reihe geschalteten Maschinen bestehenden Produktionslinie (LN) mit einer vorgegebenen Reihenfolge von N Komponenten beschickt, wobei die N Komponenten verwendet werden, um am Ende der Linie (LN) ein gewünschtes Fertigteil herzustellen, wobei die Vorrichtung Folgendes umfasst:
- K Teilmengen von Komponenten, wobei K >= 2, die in einer räumlichen Sequenz angeordnet sind,
- einen Zug von Werkstückträgern (52), der in Bezug auf die K Teilmengen beweglich ist, so dass jeder Werkstückträger (52) nacheinander mindestens einmal an jeder Teilmenge ankommt und auch an dem besagten Einlauf ankommt,
- erste Mittel (14) oder einen oder mehrere Manipulatoren zum Entnehmen einer Komponente aus einer Teilmenge und Laden derselben auf einen Werkstückträger (52) des Zuges,
- zweite Mittel (16) oder einen oder mehrere Manipulatoren zum Entnehmen einer Komponente von einem Werkstückträger des Zuges und Laden derselben auf die Produktionslinie (LN),
- eine elektronische Steuereinheit, die konfiguriert ist zum:
• Steuern der Bewegung der Werkstückträger (52), so dass sie nacheinander mindestens einmal an jeder Teilmenge ankommen und auch nacheinander am Einlauf der Linie (LN) ankommen,
• Ansteuern der ersten Mittel (14), um in der Lage zu sein, eine Komponente aus einer Teilmenge zu entnehmen und auf einen Werkstückträger (52) zu laden,
• Ansteuern der zweiten Mittel (16), um eine Komponente von einem Werkstückträger (52) zu entnehmen und auf die Linie (LN) zu laden,
• Aktivieren oder Ausschließen des Ladens einer Komponente aus einer Teilmenge, so dass sich progressiv bei der Bewegung des Zuges aufeinanderfolgende Werkstückträger (52) des Zuges mit Komponenten beladen, die der vorgegebenen Reihenfolge entsprechen, und
• Ansteuern der zweiten Mittel (16), um die Komponenten von den besagten aufeinanderfolgenden Werkstückträgern (52) zu entnehmen und auf die Linie (LN) zu laden, wobei ein Träger nach dem anderen entleert wird.

11. Vorrichtung nach Anspruch 10, wobei der Zug eine geschlossene Kette von Werkstückträgern (52) umfasst, die dazu eingerichtet ist, sich auf einem geschlossenen oder kreisförmigen Pfad zu bewegen.

12. Vorrichtung nach Anspruch 10 oder 11, wobei jede Teilmenge eine jeweilige Fördervorrichtung (12) umfasst,
wobei solche K Fördervorrichtungen (12) in parallelen Reihen vor dem Zug von Werkstückträgern (52) angeordnet sind.

13. Vorrichtung nach Anspruch 12, wobei die parallelen Reihen entlang einer Richtung senkrecht zu einer linearen Reihe von Werkstückträgern (52) in dem Zug angeordnet sind.

14. Vorrichtung nach Anspruch 12 oder 13, wobei eine oder jede Fördervorrichtung (12) ein erstes Transportmittel und ein in Reihe mit dem ersten Mittel angeordnetes zweites Transportmittel sowie zwei Roboter oder Manipulatoren umfasst,
wobei einer zwischen dem ersten Transportmittel und dem zweiten Transportmittel zum Übertragen von Komponenten von dem ersten Transportmittel auf das zweite Transportmittel angeordnet ist, und
einer zwischen dem zweiten Transportmittel und dem Zug zum Übertragen von Komponenten von dem zweiten Transportmittel auf den Zug von Werkstückträgern (52) angeordnet ist.

## Revendications

1. Procédé pour charger selon une séquence prédéfinie à l'entrée d'une ligne (LN) N composants, N >= 2, nécessaires pour produire finalement un produit fini souhaité,
la ligne (LN) étant capable de
produire un produit assemblé à partir des N composants séparés et d'assembler les N composants séparés dans un certain ordre,
comprenant les étapes suivantes:
subdiviser l'ensemble de N composants en K sous-ensembles de composants, K>=2,
agencer spatialement les K sous-ensembles en une séquence spatiale,
déplacer un train de porte-pièces (52) devant les K sous-ensembles de sorte que tous les porte-pièces (52) arrivent séquentiellement à chaque sous-ensemble au moins une fois de sorte que, si nécessaire, il est possible de prélever un composant d'un sous-ensemble et de le charger sur le porte-pièces (52), et que tous les porte-pièces (52) arrivent également séquentiellement à l'entrée de la ligne, et
pour chaque porte-pièces (52) arrivant à chaque sous-ensemble, activer ou exclure le chargement d'un composant provenant de ce sous-ensemble de sorte que, progressivement au fur et à mesure que le train se déplace, des porte-pièces (52) consécutifs du train soient chargés avec des composants correspondant à la séquence prédéfinie, et
prélever des composants desdits porte-pièces (52) consécutifs et les charger sur la ligne (LN), en vidant un porte-pièces (52) après l'autre.

2. Procédé selon la revendication 1, dans lequel un composant est chargé à partir de chaque sous-ensemble sur un porte-pièces (52) par l'intermédiaire d'un robot ou d'un manipulateur (14).

3. Procédé selon la revendication 1 ou 2, dans lequel des composants sont prélevés desdits porte-pièces (52) consécutifs et chargés sur la ligne par un robot ou un manipulateur (16).

4. Procédé selon la revendication 2 ou 3, dans lequel les robots ou manipulateurs (14) de chaque sous-ensemble sont activés pour charger un composant sur un porte-pièces (52) ou commandés pour faire autre chose si, respectivement, le porte-pièces (52) actuel présent audit sous-ensemble doit contenir un composant pour se conformer à la séquence prédéfinie ou non.

5. Procédé selon l'une quelconque des revendications précédentes, dans lequel chaque sous-ensemble comprend des piles adjacentes de composants identiques, chaque pile ayant la même hauteur, et à partir des piles adjacentes de composants de chaque sous-ensemble, une couche de composants est déchargée et posée dans une zone de travail, à partir de laquelle ils sont prélevés pour être chargés sur un porte-pièces (52).

6. Procédé selon l'une quelconque des revendications précédentes, dans lequel, si des composants restent inutilisés, ils sont placés dans une zone de repos temporaire (72) et chargés sur un porte-pièces (52) lors de la première occurrence.

7. Procédé selon l'une quelconque des revendications précédentes, dans lequel le produit assemblé est un meuble.

8. Procédé selon l'une quelconque des revendications précédentes, dans lequel les composants séparés sont des panneaux et/ou de la quincaillerie.

9. Procédé selon l'une quelconque des revendications précédentes, dans lequel un composant séparé parmi les N composants est un panneau supérieur, un panneau arrière, un panneau inférieur, ou deux panneaux latéraux, et facultativement une étagère intermédiaire, et/ou des guides linéaires et/ou des bandes de renfort, pour constituer un tiroir ou un compartiment de meuble à la fin de la ligne.

10. Appareil d'alimentation configuré pour alimenter l'entrée d'une ligne de production (LN), constituée de plusieurs machines en série, avec une séquence prédéfinie de N composants, les N composants étant utilisés pour produire une pièce finie souhaitée à la fin de la ligne (LN), l'appareil comprenant:
- K sous-ensembles de composants, K >= 2, agencés spatialement en une séquence spatiale,
- un train de porte-pièces (52) qui est mobile par rapport aux K sous-ensembles de sorte que chaque porte-pièces (52) arrive séquentiellement à chaque sous-ensemble au moins une fois et arrive également à ladite entrée,
- des premiers moyens (14), ou un ou plusieurs manipulateurs, pour prélever un composant d'un sous-ensemble et le charger sur un porte-pièces (52) du train,
- des seconds moyens (16), ou un ou plusieurs manipulateurs, pour prélever un composant d'un porte-pièces du train et le charger sur la ligne de production (LN),
- une unité de commande électronique configurée pour:
• commander le mouvement des porte-pièces (52) de sorte qu'ils arrivent séquentiellement à chaque sous-ensemble au moins une fois et arrivent également séquentiellement à l'entrée de la ligne (LN),
• piloter les premiers moyens (14) pour pouvoir prélever d'un sous-ensemble un composant et le charger sur un porte-pièces (52),
• piloter les seconds moyens (16) pour prélever un composant d'un porte-pièces (52) et le charger sur la ligne (LN),
• activer ou exclure le chargement d'un composant d'un sous-ensemble de sorte que, progressivement au fur et à mesure que le train se déplace, des porte-pièces (52) consécutifs du train soient chargés avec des composants correspondant à la séquence prédéfinie, et
• piloter les seconds moyens (16) pour prélever les composants desdits porte-pièces (52) consécutifs et les charger sur la ligne (LN), en vidant un porte-pièces après l'autre.

11. Appareil selon la revendication 10, dans lequel le train comprend une chaîne fermée de porte-pièces (52) adaptée pour se déplacer sur un trajet fermé ou circulaire.

12. Appareil selon la revendication 10 ou 11, dans lequel chaque sous-ensemble comprend un dispositif de transport respectif (12),
lesdits K dispositifs de transport (12) étant agencés en rangées parallèles devant le train de porte-pièces (52).

13. Appareil selon la revendication 12, dans lequel les rangées parallèles sont agencées le long d'une direction perpendiculaire à une rangée linéaire de porte-pièces (52) dans le train.

14. Appareil selon la revendication 12 ou 13, dans lequel un ou chaque dispositif de transport (12) comprend un premier moyen de transport et un second moyen de transport placé en série avec le premier moyen, et deux robots ou manipulateurs,
l'un étant placé entre le premier moyen de transport et le second moyen de transport pour transférer des composants du premier moyen de transport au second moyen de transport, et
l'autre étant placé entre le second moyen de transport et le train pour transférer des composants du second moyen de transport au train de porte-pièces (52).
